# EUROPEAN PATENT SPECIFICATION

(11) **EP 4 591 710 B1**
(45) Date of publication and mention of the grant of the patent: **02.09.2026**
(21) Application number: 24219375.3
(22) Date of filing: 12.12.2024
(51) Int. Cl.: A01M 29/34, A01M 1/10, A01M 1/14, A01M 1/20, A47B 91/14, A47C 19/02

(54) **SUPPORT FOR UPHOLSTERED FURNITURE, SPECIFICALLY TO COMBAT BED BUGS**
STÜTZE FÜR POLSTERMÖBEL, INSBESONDERE ZUR BEKÄMPFUNG VON BETTWANZEN
SUPPORT POUR MEUBLES REMBOURRÉS, SPÉCIALEMENT CONÇU POUR LUTTER CONTRE LES PUNAISES DE LIT

(30) Priority: 23.01.2024 IT 202400001215
(43) Date of publication of application: 30.07.2025
(73) Proprietor: Lucii, Diego, 051933 Bucharest (RO)
(72) Inventor: Lucii, Diego, 051933 Bucharest (RO)
(74) Representative: Fanfani, Stefano

(56) References cited:
- US-A- 5 042 192
- US-A1- 2014 090 290

## Description

### Technical field

The present invention belongs to the sector of devices used to control and eradicate insects that infest homes.

More precisely, this invention finds application in relation to bed bugs. Bed bugs are small blood-sucking insects that infest bedrooms in particular since they feed on human and animal blood; they belong to the species *Cimex lectularius* or *Cimex hemipterus* (of the *Cimicidae* family) and are not very active during the day, when they remain hidden in their burrows, from which they emerge during the night to feed.

The present invention finds specific application as a support for upholstered furniture; however, it can also be effectively used as a stand-alone trap.

### Present status of the art

During the day, bed bugs hide in their burrows, usually represented by: small cracks in the walls, narrow gaps in the wooden bed frames, mattress seams, tears in the upholstery, electrical outlets and, especially in accommodation facilities, fire alarms.

Bed bugs are attracted by the heat that is created in bedrooms during the night and by the carbon dioxide exhaled by the bodies of those who stay there, for this reason it is easier to track them in these places of the house and this explains their common name. This, however, does not mean that they are strictly nocturnal insects; they prefer the night, but they also move with the light, although this is a very rare event and it is difficult to witness, even if it is not impossible. Adult bed bugs are oval and flat, reddish-brown in colour, and measure about 5 millimetres in length and 1.5-3 millimetres in width, making them visible to the naked eye; their thin, flat bodies allow them to fit into the smallest spaces and remain there for long periods of time, even without a blood meal.

Bed bugs do not fly or jump, but they still spread very quickly by crawling, and can travel over 30 meters in a night, although they tend to live within 2 meters of where people sleep.

Bed bugs are typically carried from place to place as people travel, as bed bugs can easily get into the seams and folds of luggage, folded clothes, towels and bedding, and anywhere else they can hide. Most people do not realize that they are unknowingly carrying bed bugs as they travel from place to place, infecting the areas where they sleep while traveling. Of course, everyone is at risk of contracting bed bugs when visiting an infected area, however, those who travel frequently and share living and sleeping areas where other people have previously slept are at a greater risk of being bitten and/or spreading a bed bug infestation.

Females can lay up to 500 eggs in their lifetime, which are about a millimetre in size and are covered with a sticky substance that makes them difficult to remove. When the eggs hatch, the small bed bugs become adults in 6-8 weeks. The food of bed bugs is blood, which is sucked by a sharp anatomical organ, like a stylet. The insects have an average lifespan of about 9 months; during this period, they are capable of remaining without food for several months, showing considerable resistance to food shortages; normally, after a meal, they do not feed again until at least 4 or 5 days later.

The main medical concern associated with bed bugs is the skin. When bed bugs bite, they inject their saliva, which contains a variety of components that include anesthetics, vasodilatory compounds, and anticoagulants. These components have the function of causing blood flow to continue in the bitten area and to prevent the host from feeling the bite. It is not known whether bed bugs spread diseases or are potential vectors for specific infections, as is the case with many other insects. In any case, they are annoying hematophagous parasites, whose bites can cause itching and loss of sleep with all the consequences that this entails. Suffice it to say, for example, that giving in to the itchy sensation evoked by a bed bug bite can lead to excessive scratching, increasing the risk of a secondary skin infection.

For these reasons, living in a house infested with bed bugs is very unpleasant and therefore many effective solutions have been developed over time to eradicate these insects. In particular, many compositions of insecticides specifically developed to eradicate bed bugs are known, but solutions and methods have also been developed, which combine the use of chemical solutions with specific methods for their application, as for example shown in US2014311016A1. However, the use of pesticides or, in general, of insecticides can be harmful to the health of humans or animals.

Other known methods of controlling and reducing bed bug infestations include the application of diatomaceous earth, however these methods may require frequent handling of the diatomaceous earth, which in itself is undesirable, or they may be so complicated that they require the involvement of professionals, which may increase the time and cost of treatment. This latter aspect is particularly relevant in the case of the hospitality industry, where the problem of eradicating bed bug colonies is particularly acute. Very specific application examples are shown in CA3007796A1, CA2924414A1, US2012285076A1, US 2014/090290A1 and in US 5042192A.

Diatomaceous earth is a rock powder composed of extremely small particles (1/100 of a millimetre) with an irregular and pointed shape. Upon contact with this powder, all insects with an exoskeleton are injured and die from their wounds due to dehydration. Since the action of diatomaceous earth is purely mechanical, and not chemical, insects cannot develop resistance.

### Objects and summary of the invention

The objective of the present invention is to provide a device to prevent bed bug bites and, at the same time, to eradicate their infesting colony. In particular, an aim of the present invention is to combat bed bugs without the need to spread insecticides in the environments where people sleep. This objective is achieved with a support as defined in claim 1.

In a preferred embodiment, the present invention contemplates the use of diatomaceous earth to accelerate disinfestation, however without there being any need to handle them frequently.

These and other objectives that will become clear from reading the present text are achieved with the object of the present invention, which comprises a base on which stands a vertical element, on the top of which is an upper support containment element.

The vertical element develops longitudinally from the bottom to the top and the upper support containing element has a flat extrados and a concave intrados.

A substance with permanent adhesive properties over time is placed inside the concavity defined on the intrados of the support containment element, for example petroleum gel, i.e. petrolatum, also called Vaseline, designed to trap and retain bed bugs that have crawled from the floor to the bed along the vertical support. The depth of the concavity defined on the intrados of the support containment element varies according to the possible embodiments of the invention: a greater depth results in a more effective disinfesting action since it forces the insects to travel a longer route inside the adhesive substance.

In a preferred embodiment, two vertical walls form a right angle between them on a portion of the edges of the extrados of the upper support containment element; the function of the latter is to cooperate with the extrados of the support containment element to support one of the corners of the frame that supports the mattress.

In the case where the support is used as a non-angular support, for example in the case of large furniture, or as a central support for double beds, only one vertical wall will be erected on the support element.

The shape and dimensions of the base and the upper support element are such that, by placing the present invention close to a vertical wall, when the base touches the wall, the upper support element remains distant from it by the amount needed to leave space for sheets and blankets to fall, without these coming into contact with the wall or the floor.

This special conformation, which is neither disclosed in nor suggested or anticipated by prior art, prevents bed bugs from climbing onto the bed by crawling on the sheets or blankets or along the wall and forces them to venture inside the base and then climb along the vertical element until they reach the intrados of the upper support element, where they remain entangled in the adhesive substance. This allows to simplify bed bug control, avoids frequent handling of insecticides, and targets bed bugs behaviour and physiology specifically, which is not addressed in prior art documents.

The extrados of the base defines a concavity facing upwards, suitable for receiving diatomaceous earth inside it, which causes lesions to the bed bugs that accelerate their death.

The present invention has been developed for upholstered furniture and not only for beds, therefore it is specified that in this patent text the term bed is intended to refer to any upholstered furniture suitable for people to rest on and therefore susceptible to being infested by bed bugs, such as for example armchairs, sofas, couches and the like. Furthermore, the invention can be usefully employed to eradicate bed bugs even if used as a pedestal for a heat source that attracts insects, such as for example a lamp or the like, or as a pedestal for a plant, the latter, through cellular respiration processes, emits carbon dioxide that attracts insects, in fact "simulating" the emission of carbon dioxide by a human body.

### Brief description of the drawings

The invention will be better understood by following the description and the drawings, which show practical non-limiting embodiments of the invention.

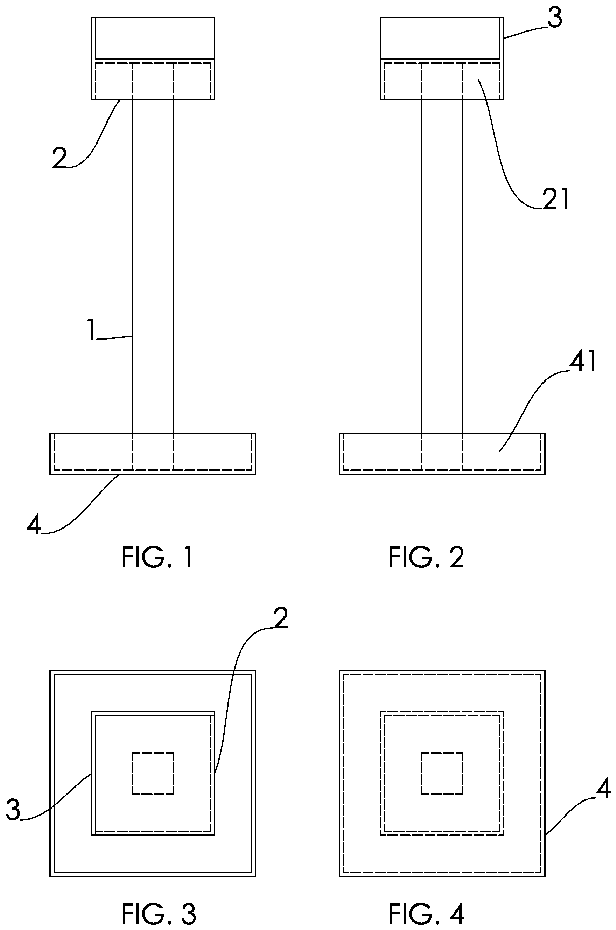

**Figs. 1, 2, 3** and **4** show respectively two side views, a top view and a bottom view of the device in the angular configuration.
**Figs. 5, 6, 7** and **8** show respectively two side views, a top view and a bottom view of the device in the central configuration, for a double bed.

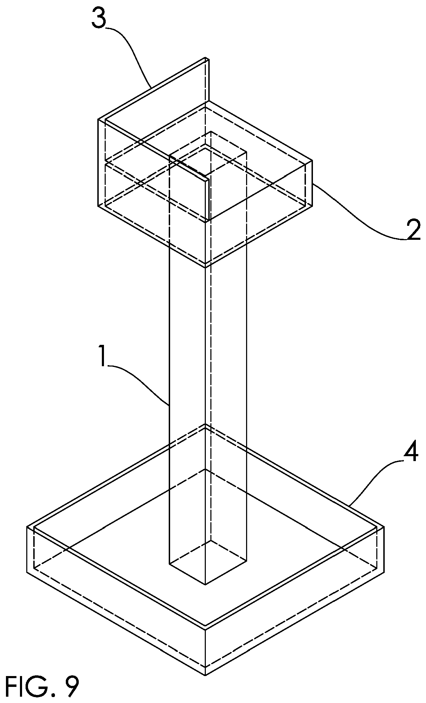

**Fig. 9** shows an axonometric view of the device in the angular configuration.

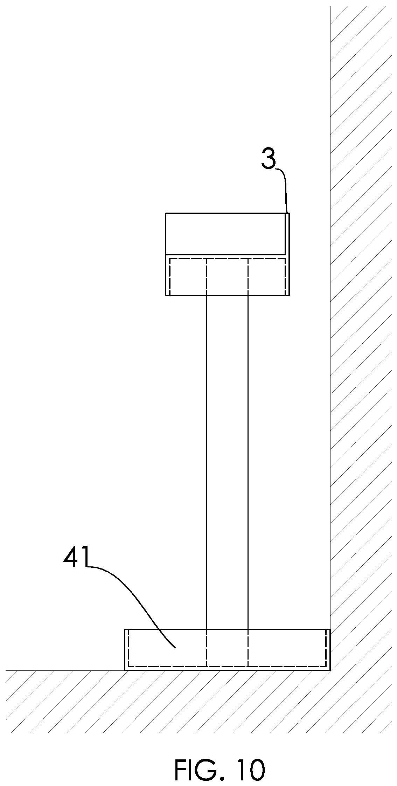

Fig. 10 shows a side view of the device in the corner configuration, placed on a floor and placed against the wall of a room.

### Detailed description of an embodiment of the invention

As shown in the figures, the present invention is composed of a base (4) on which a vertical element (1) with longitudinal development stands and to whose top a support containment element (2) is solidly connected. The extrados of the base (4) defines a cavity (41) within which the diatomaceous earth is placed; the intrados of the support containment element (2) also defines a cavity (21) which houses a sticky substance, such as petroleum jelly, or petrolatum. Both cavities (21, 41) completely surround the vertical element (1) so that the insects are forced to pass through them to reach the bed.

On a portion of the edges of the support containment element (2) there are two vertical walls (3) which have the function of containing the bed frame.

Advantageously, the shape and the dimensions of the base (4) and of the upper support containment element (2) are such that, at least on the sides of the invention where the two vertical walls (3) are located, the edges of the base (4) protrude outwards more than the edges of the support containment element (2).

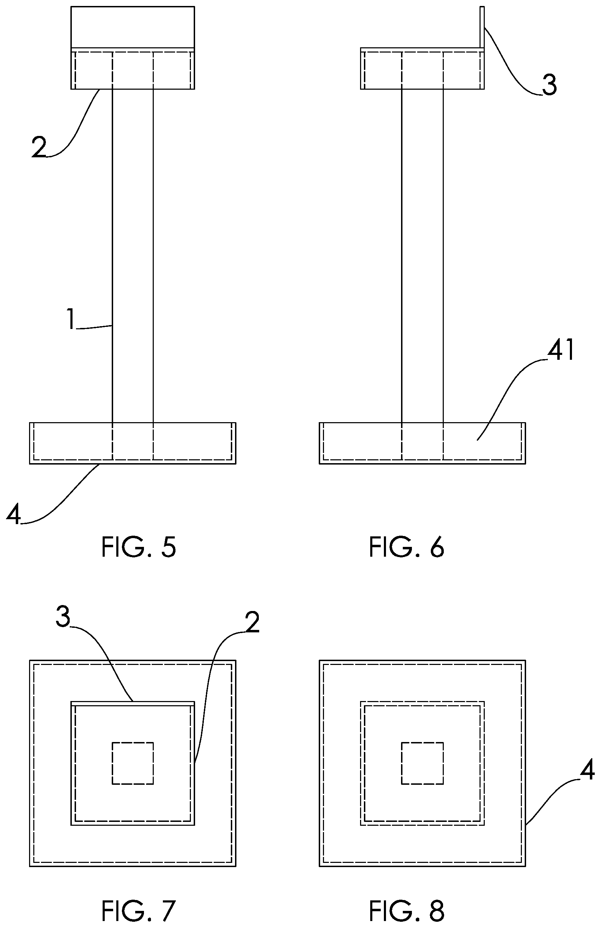

The support shown in figures 5, 6, 7 and 8 is specifically designed to be used as a central support and not as an angular one, for this reason it has only one wall (3) above the support containment element (2).

## Claims

1. A support for upholstered furniture comprising a base (4), the extrados of which defines a concavity (41) facing upward, and on which there is a vertical element (1) to the upper end of which is integrally connected an upper supporting containment element (2), the latter being shaped so as to comprise:
- an intrados defining a concavity (21) facing downwards, which completely surrounds said upper extremity of said vertical element (1) and is filled with a viscous substance such as petroleum gel,
- an extrados suitable for providing support for the frame of an upholstered piece of furniture, such as a bed,
- one or more vertical walls (3), rectilinear, rising consecutively on at least a portion of the edges of said supporting containment element (2),
**characterised in that,** at least on the sides of the supporting containment element (2) where said one or more vertical walls (3) are located, the edges of the base (4) protrude outwards beyond the edges of said supporting containment element (2).

2. Support for upholstered furniture according to the preceding claim, **characterised in that** the extrados of said base (4) defines a concavity (41) facing upwards that completely surrounds the lower end of said vertical element (1) and is filled with diatomaceous earth.

3. Support for upholstered furniture according to one of the preceding claims **characterized in that** on said supporting containment element (2) rise two straight vertical walls (3) which form a right angle.

## Patentansprüche

1. Eine Stütze für Polstermöbel, bestehend aus einem Sockel (4), dessen Oberseite eine nach oben gerichtete Vertiefung (41) bildet, und auf dem sich ein vertikales Element (1) befindet, an dessen oberem Ende ein oberes Stütz- und Aufnahmeelement (2) einstückig angebracht ist, wobei letzteres so geformt ist, dass es Folgendes umfasst:
- eine Innenfläche, die eine nach unten gerichtete Wölbung (21) bildet, welche das obere Ende des vertikalen Elements (1) vollständig umgibt und mit einer viskosen Substanz wie beispielsweise Petrolatum gefüllt ist,
- eine Oberseite, die zur Abstützung des Rahmens eines Polstermöbels, wie beispielsweise eines Bettes, geeignet ist,
- eine oder mehrere vertikale Wände (3), die geradlinig verlaufen und sich nacheinander über zumindest einen Teil der Kanten des genannten tragenden Umfassungselements (2) erstrecken,
**dadurch gekennzeichnet, dass** zumindest an den Seiten des Aufnahmeelements (2), an denen sich die eine oder die mehreren vertikalen Wände (3) befinden, die Kanten des Sockels (4) über die Kanten des Stütz- und Aufnahmeelements (2) hinausragen.

2. Stütze für Polstermöbel gemäß dem vorstehenden Anspruch, **dadurch gekennzeichnet, dass** die Oberseite des Sockels (4) eine nach oben gerichtete Vertiefung (41) bildet, die das untere Ende des vertikalen Elements (1) vollständig umgibt und mit Kieselgur gefüllt ist.

3. Stütze für Polstermöbel gemäß einem der vorstehenden Ansprüche, **dadurch gekennzeichnet, dass** an dem genannten tragenden Stütz- und Aufnahmeelement (2) zwei gerade, senkrechte Wände (3) emporragen, die einen rechten Winkel bilden.

## Revendications

1. Support pour meubles rembourrés comprenant une base (4), dont l'extrados définit une concavité (41) orientée vers le haut, et sur laquelle est disposé un élément vertical (1), à l'extrémité supérieure duquel est relié de manière solidaire un élément supérieur de support et de confinement (2), ce dernier étant conformé de manière à comprendre :
- un intrados définissant une concavité (21) orientée vers le bas, entourant complètement ladite extrémité supérieure dudit élément vertical (1) et remplie d'une substance visqueuse telle qu'une gelée de pétrole,
- un extrados apte à assurer le support de la structure d'un meuble rembourré, tel qu'un lit ,
- une ou plusieurs parois verticales (3), rectilignes, s'élevant de manière continue sur au moins une partie du pourtour dudit élément de support et de confinement (2),
**caractérisé en ce que,** au moins sur les côtés de l'élément de support et de confinement (2) où sont disposées lesdites une ou plusieurs parois verticales (3), les bords de la base (4) s'étendent vers l'extérieur au-delà des bords dudit élément de support et de confinement (2).

2. Support pour meubles rembourrés selon la revendication précédente, **caractérisé en ce que** l'extrados de ladite base (4) définit une concavité (41) orientée vers le haut, entourant complètement l'extrémité inférieure dudit élément vertical (1) et remplie de terre de diatomées.

3. Support pour meubles rembourrés selon l'une quelconque des revendications précédentes, **caractérisé en ce que** deux parois verticales rectilignes (3) s'élèvent sur ledit élément de support et de confinement (2), lesdites parois formant un angle droit.
